# EUROPEAN PATENT APPLICATION

(11) **EP 4 648 167 A1**
(43) Date of publication of application: **12.11.2025**
(21) Application number: 24781181.3
(22) Date of filing: 26.03.2024
(51) Int. Cl.: H01M 10/0567, H01M 4/505, H01M 4/525, H01M 10/0569, H01M 10/0568, H01M 10/052, H01M 10/42, H01M 4/02

(54) **LITHIUM SECONDARY BATTERY**

(30) Priority: 27.03.2023 KR 20230040007; 15.12.2023 KR 20230183782
(71) Applicant: LG Energy Solution, Ltd., Seoul 07335 (KR)
(72) Inventor: LEE, Jung Min, Daejeon 34122 (KR); YEOM, Chul Eun, Daejeon 34122 (KR); JI, Su Hyeon, Daejeon 34122 (KR); LEE, Chul Haeng, Daejeon 34122 (KR)
(74) Representative: Hoffmann Eitle
(86) International application number: PCT/KR2024/003766
(87) International publication number: WO 2024/205190

(57) **Abstract**

A lithium secondary battery includes a positive electrode; a negative electrode; a separator interposed between the positive electrode and the negative electrode; and a non-aqueous electrolyte. The positive electrode includes a positive electrode active material, the positive electrode material includes a perlithium manganese-rich oxide containing 50 mol% or more of Mn based on all metal elements excluding lithium, and having a molar ratio of lithium to transition metal exceeding 1, the non-aqueous electrolyte includes a lithium salt, an organic solvent, and an additive, the organic solvent includes a first organic solvent and a second organic solvent, the first organic solvent includes ethylene carbonate, the second organic solvent includes diethyl carbonate and ethyl methyl carbonate, and the additive includes cyclic sulfur oxide represented by a specific chemical formula.

## Description

### TECHNICAL FIELD

### Cross-reference to related applications

This application is based on and claims priority from Korean Patent Application No. 10-2023-0040007, filed on March 27, 2023 and Korean Patent Application No. 10-2023-0183782, filed on December 15, 2023 with the Korean Intellectual Property Office, the disclosure of which is incorporated herein in its entirety by reference.

### Technical field

The present disclosure relates to lithium secondary batteries.

### BACKGROUND ART

Recently, the applications of lithium secondary batteries have rapidly expanded not only from the supply of power for electricity, electronics, communication, and electronic devices such as computers, but also to the storage and supply of power for large-sized devices such as automobiles and energy storage systems. Consequently, there is an increasing demand for secondary batteries with a high capacity, high power, and high stability.

The lithium secondary battery generally includes a positive electrode containing a positive electrode active material, a negative electrode containing a negative electrode active material, an electrolyte that serves as a medium for transferring lithium ions, and a separator. In this case, the negative electrode active material may be a carbon-based active material or a silicon-based active material. In addition, the positive electrode active material may be lithium transition metal oxide such as lithium cobalt oxide (LiCoO₂), lithium nickel oxide (LiNiO₂), or lithium nickel-cobalt-manganese composite oxide.

Meanwhile, improvements are being made to characteristics of each of the positive electrode, the negative electrode, the electrolyte, and the separator to construct high-capacity secondary batteries.

### DISCLOSURE OF THE INVENTION

### Technical problem

The present disclosure provides a lithium secondary battery including a perlithium manganese-rich oxide as a positive electrode active material, which reduces the amount of gas generation such as CO₂ at the positive electrode interface during high-voltage or high-temperature operation, reduces gas generation during initial activation, and charging and discharging, and suppresses the elution of transition metal from the positive electrode active material, thereby simultaneously improving lifespan at high temperatures, reducing resistance, improving durability, and preventing gas generation.

### Technical solution

The present disclosure provides a lithium secondary battery including a positive electrode; a negative electrode; a separator interposed between the positive electrode and the negative electrode; and a non-aqueous electrolyte, in which the positive electrode includes a positive electrode active material, the positive electrode active material includes a perlithium manganese-rich oxide containing about 50 mol% or more of Mn based on all metal elements excluding lithium, and having a molar ratio of lithium to transition metal exceeding about 1, the non-aqueous electrolyte includes a lithium salt, an organic solvent, and an additive, the organic solvent includes a first organic solvent and a second organic solvent, the first organic solvent includes ethylene carbonate, the second organic solvent includes diethyl carbonate and ethyl methyl carbonate, and the additive includes a compound represented by Formula 1: 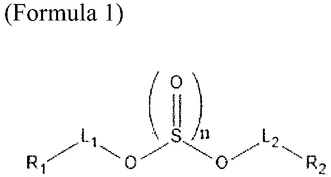 in Formula 1, n is 1 or 2; L₁ and L₂ are each independently a direct bond or a substituted or unsubstituted alkylene group having 1 to 6 carbon atoms; R₁ and R₂ are each independently selected from a substituent represented by Formula 2 below, an alkyl group having 1 to 10 carbon atoms, an alkyl group having 1 to 10 carbon atoms substituted with one or more fluorine atoms, an alkenyl group having 2 to 10 carbon atoms, and an alkynyl group having 2 to 10 carbon atoms, a phosphate group, and a nitrile group; and at least one of R₁ and R₂ is a substituent represented by Formula 2: 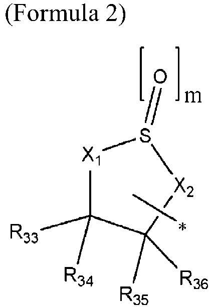 in Formula 2, m is 1 or 2; X₁ and X₂ are each independently -O- or -C(R₃₁)(R₃₂)-, provided that at least one of X₁ and X₂ is -O-; R₃₁ to R₃₆ are each independently hydrogen, an alkyl group having 1 to 6 carbon atoms, -C(=O)-R₄, or -R₅-O-C(=O)-R₆; R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms; R₅ is a substituted or unsubstituted alkylene group having 1 to 6 carbon atoms; each substituent of L₁, L₂, R₄, R₅, and R₆ is at least one independently selected from the group consisting of deuterium, -F, -Cl, -Br, -I, -CN, -NO₂, and -SO₃; * is a binding position to L₁ or L₂, when L₁ and L₂ are both direct bonds, then R₁ and R₂ are not simultaneously CS-7 below; and when L₁ and L₂ are both methylene groups, and n is 2, then R₁ and R₂ are not simultaneously CS-2 below.

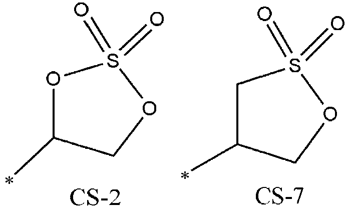

### Advantageous effects

The lithium secondary battery of the present disclosure uses perlithium manganese-rich oxide as the positive electrode active material, and the non-aqueous electrolyte includes a lithium salt, an organic solvent, and an additive, the organic solvent includes ethylene carbonate, diethyl carbonate and ethyl methyl carbonate, and the additive includes cyclic sulfur oxide represented by a specific chemical formula. According to the present disclosure, the combination of the above-mentioned organic solvents enables the realization of a lithium secondary battery that significantly reduces the amount of gas generation at the positive electrode interface including a perlithium manganese-rich oxide, improves the lifespan performance of the negative electrode, and consequently has an excellent capacity retention rate and gas generation reduction performance. For example, the cyclic sulfur oxide included as the additive has a low consumption rate in the secondary battery, and thus, long-term durability may be continuously improved while the secondary battery is in operation. Therefore, the lithium secondary battery of the present disclosure may simultaneously improve the lifespan, reduce resistance, improve durability, and prevent gas generation, especially at high temperature and high voltage.

### MODE FOR CARRYING OUT THE INVENTION

In the following detailed description, reference is made to the accompanying drawings which form a part hereof. The illustrative embodiments described in the detailed description, drawings, and claims are not meant to be limiting. Other embodiments may be utilized, and other changes may be made without departing from the spirit or scope of the subject matter presented herein.

In the descriptions herein, terms such as "include," "provide," and "have" are intended to designate the presence of features, numerals, steps, operations, components, and parts described herein, or combinations thereof, but should not be interpreted to exclude the possibility of presence or addition of one or more other features, numerals, steps, operations, components, parts, or combinations thereof.

As used herein, the average particle size (D50) may be defined as the particle size corresponding to 50% of the volume accumulation in the particle size distribution curve of the particles. The average particle size D50 may be measured, for example, using a laser diffraction method. The laser diffraction method is generally capable of measuring particle sizes from the submicron region down to a few millimeters and may obtain results with high reproducibility and high resolution.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

Perlithium manganese-rich oxide is attracting attention as a next-generation positive electrode active material for constructing high-capacity batteries. The perlithium manganese-rich oxide is a relatively inexpensive and abundant source of manganese (Mn), and lithium secondary batteries using the perlithium manganese-rich oxide have the advantage of high capacity. However, the application of these perlithium manganese-rich oxides has the problem of significantly increasing gas generation such as CO₂ due to electrolyte side reactions at the positive electrode interface when operating at high voltage (*e.g.,* 4.35 V or higher) or high temperature. In addition, in the case of perlithium manganese-rich oxide, the utilization of the material is limited by the fact that the reactive oxygen generated by the phase conversion of the positive electrode active material during the activation (formation), charging, and discharging process intensifies the decomposition of the electrolyte and greatly increases the amount of gas such as CO₂, and the transition metal eluted from the positive electrode active material is electrodeposited on the negative electrode, thereby destroying the solid electrolyte interphase (SEI) film of the negative electrode.

The present disclosure provides a lithium secondary battery that overcomes the aforementioned gas generation problem and the SEI film destruction problem of the negative electrode while applying a perlithium manganese-rich oxide as the positive electrode active material of the lithium secondary battery.

Hereinafter, the present disclosure will be described in more detail.

### Lithium Secondary Battery

The present disclosure relates to a lithium secondary battery.

The lithium secondary battery according to the present disclosure includes a positive electrode; a negative electrode; a separator interposed between the positive electrode and the negative electrode; and a non-aqueous electrolyte, in which the positive electrode includes a positive electrode active material, the positive electrode active material includes a perlithium manganese-rich oxide containing about 50 mol% or more of Mn based on all metal elements excluding lithium, and having a molar ratio of lithium to transition metal exceeding about 1, the non-aqueous electrolyte includes a lithium salt, an organic solvent, and an additive, the organic solvent includes a first organic solvent and a second organic solvent, the first organic solvent includes ethylene carbonate, the second organic solvent includes diethyl carbonate and ethyl methyl carbonate, and the additive includes a compound represented by Formula 1: 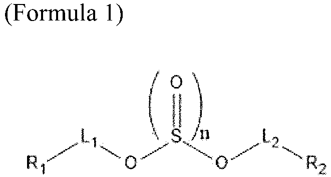 in Formula 1, n is 1 or 2; L₁ and L₂ are each independently a direct bond or a substituted or unsubstituted alkylene group having 1 to 6 carbon atoms; R₁ and R₂ are each independently selected from a substituent represented by Formula 2 below, an alkyl group having 1 to 10 carbon atoms, an alkyl group having 1 to 10 carbon atoms substituted with one or more fluorine atoms, an alkenyl group having 2 to 10 carbon atoms, and an alkynyl group having 2 to 10 carbon atoms, a phosphate group, and a nitrile group; and at least one of R₁ and R₂ is a substituent represented by Formula 2: 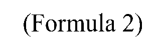 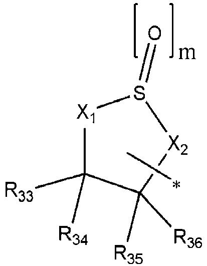 in Formula 2, m is 1 or 2; X₁ and X₂ are each independently -O- or -C(R₃₁)(R₃₂)-, provided that at least one of X₁ and X₂ is -O-; R₃₁ to R₃₆ are each independently hydrogen, an alkyl group having 1 to 6 carbon atoms, -C(=O)-R₄, or -R₅-O-C(=O)-R₆; R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms; R₅ is a substituted or unsubstituted alkylene group having 1 to 6 carbon atoms; each substituent of L₁, L₂, R₄, R₅, and R₆ is at least one independently selected from the group consisting of deuterium, -F, -Cl, -Br, -I, -CN, -NO₂, and -SO₃; * is a binding position to L₁ or L₂, when L₁ and L₂ are both direct bonds, then R₁ and R₂ are not simultaneously CS-7 below; and when L₁ and L₂ are both methylene groups, and n is 2, then R₁ and R₂ are not simultaneously CS-2 below.

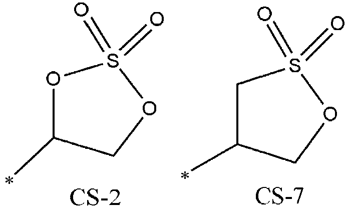

The lithium secondary battery includes a positive electrode; a negative electrode; a separator; and a non-aqueous electrolyte. For example, the lithium secondary battery includes a positive electrode; a negative electrode; a separator interposed between the positive electrode and the negative electrode; and a non-aqueous electrolyte. The lithium secondary battery may be manufactured by storing, in a battery case, an electrode assembly including a positive electrode, a negative electrode, and a separator interposed between the positive electrode and the negative electrode; and injecting a non-aqueous electrolyte into the battery case.

### (1) Positive Electrode

The positive electrode includes a positive electrode active material.

The positive electrode active material according to the present disclosure includes a perlithium manganese-rich oxide. The perlithium manganese-rich oxide contains about 50 mol% or more of Mn based on all metal elements excluding lithium, and having a molar ratio of lithium to transition metal exceeding about 1.

The perlithium manganese-rich oxide is attracting attention as a next-generation high-capacity positive electrode active material, but its use is limited due to the material's inherent structural deterioration. For example, when the perlithium manganese-rich oxide is used as a positive electrode active material, there is a problem that an electrolyte side reaction occurs at the positive electrode interface and the amount of gases such as carbon dioxide (CO₂) generated significantly increases. In addition, during the initial activation of a lithium secondary battery containing perlithium manganese-rich oxide, reactive oxygen liberated from the perlithium manganese-rich oxide decomposes and consumes organic solvents (such as ethylene carbonate) contained in the non-aqueous electrolyte, thereby generating gas by-products, which lead to problems of reduced lifespan performance, increased resistance, and reduced safety. In addition, there is a problem that manganese (Mn) is eluted to balance the charge as reactive oxygen is liberated during the charging and discharging process of the lithium secondary battery including the perlithium manganese-rich oxide. At this time, the eluted manganese is electrodeposited on the negative electrode and destroys the solid electrolyte interphase (SEI) film, and the reactive oxygen liberated during the charging and discharging process continuously decomposes and consumes the organic solvent in the non-aqueous electrolyte, thereby increasing the generation of gas byproducts. The consumption of the non-aqueous electrolyte, the structural collapse of the perlithium manganese-rich oxide, and the increase in gas byproducts significantly degrade the lifespan performance, resistance characteristics, and safety of the lithium secondary battery. Furthermore, these problems are exacerbated under high temperature and high voltage conditions.

In order to solve these problems, the lithium secondary battery according to the present disclosure includes ethylene carbonate, diethyl carbonate, and ethyl methyl carbonate as organic solvents of the non-aqueous electrolyte, as will be described later, and the additive includes a compound represented by Formula 1. According to the present disclosure, the combination of the components of the non-aqueous electrolyte enables the realization of a lithium secondary battery that significantly reduces the amount of gas generation at the positive electrode interface including a perlithium manganese-rich oxide, improves the lifespan performance of the negative electrode, and consequently has an excellent capacity retention rate and gas generation reduction performance, compared to conventional lithium secondary batteries. The lithium secondary battery of the present disclosure may have excellent lifespan performance and gas reduction performance, especially at high temperatures and high voltages.

The perlithium manganese-rich oxide may include a compound represented by Formula X:

(Formula X) Li₁₊ₛ[NiₜCoᵤMnᵥM¹_{w}]O_{2+z}

In Formula X, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo; and s, t, u, v, w, and z satisfy 0.05≤s≤1, 0≤t≤0.5, 0≤u≤0.3, 0.5≤v<1.0, 0≤w≤0.2, and 0≤z≤1. For example, in Formula X, s, t, u, v, w, and z may satisfy 0.05≤s≤1.0, 0.1≤t≤0.5, 0≤u≤0.1, 0.5≤v<1.0, 0≤w≤0.2, and 0≤z≤1. Alternatively, in Formula X, s, t, u, v, w, and z may satisfy 0.10≤s≤0.50, 0.1≤t≤0.5, 0≤u≤0.1, 0.6≤v<1.0, 0≤w≤0.1, and 0≤z≤0.50.

According to an embodiment, the perlithium manganese-rich oxide may include a compound represented by Formula Y:

(Formula Y) XLi₂MnO₃·(1-X)Li[Ni_{1-y-z-w}Mn_{y}Co_{z}M¹_{w}]O₂

In Formula Y, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo. Further, in Formula Y, X, y, z, and w may satisfy 0.1≤X≤0.5, 0.5≤y<1, 0≤z≤0.3, and 0≤w≤0.2, for example, 0.2≤X≤0.5, 0.5≤y<1, 0≤z≤0.1, 0≤w≤0.2, or 0.3≤X≤0.5, 0.6≤y<1, 0≤z≤0.1, and 0≤w≤0.2.

The positive electrode may include a positive electrode collector; and a positive electrode active material layer disposed on at least one side of the positive electrode collector. At this time, the positive electrode active material may be included in the positive electrode active material layer.

The positive electrode collector may be, without being particularly limited, any positive electrode collector that has high conductivity without causing chemical changes in the battery. For example, the positive electrode collector may include at least one selected from the group consisting of copper, stainless steel, aluminum, nickel, titanium, calcined carbon, and aluminum-cadmium alloy. According to one embodiment, the positive electrode collector may include aluminum.

The positive electrode collector may typically have a thickness of about 3 µm to 500 µm.

The positive electrode collector may have fine irregularities formed on the surface to strengthen the bonding force of the positive electrode active material. For example, the positive electrode collector may be used in various forms, such as a film, a sheet, a foil, a net, a porous body, a foam, and a non-woven body.

The positive electrode active material layer may be disposed on at least one side of the positive electrode collector, for example, one side or both sides of the positive electrode collector.

The positive electrode active material may be included in the positive electrode active material layer in an amount of about 80% by weight to 99% by weight, for example, about 92% by weight to 98.5% by weight, in consideration of sufficient capacity of the positive electrode active material.

Since the positive electrode active material has been described above, further descriptions will be omitted.

The positive electrode active material layer may further include a binder and/or a conductive material along with the positive electrode active material.

The binder is a component that aids in binding of the active material and the conductive material and binding to the collector, and may include, for example, at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, and fluororubber. According to one embodiment, the binder may include polyvinylidene fluoride.

The binder may be included in the positive electrode active material layer in an amount of about 1% by weight to 20% by weight, for example, about 1.2% by weight to 10% by weight, in order to secure sufficient binding force between components such as the positive electrode active material.

The conductive material may be used to assist and improve conductivity in secondary batteries, and may be, without being particularly limited, any material that has conductivity without causing chemical changes. For example, the positive electrode conductive material may include at least one selected from the group consisting of graphite, such as natural graphite or artificial graphite; carbon black, such as carbon black, acetylene black, Ketchen black, channel black, furnace black, lamp black, and thermal black; conductive fibers, such as carbon fibers and metal fibers; conductive tubes, such as carbon nanotubes; fluorocarbon; metal powders, such as aluminum and nickel powders; conductive whiskers, such as zinc oxide and potassium titanate; conductive metal oxides, such as titanium oxide; polyphenylene derivatives. According to one embodiment, the positive electrode conductive material may include carbon nanotubes in terms of improving conductivity.

The conductive material may be included in the positive electrode active material layer in an amount of about 1% by weight to 20% by weight, for example, about 1.2% by weight to 10% by weight in terms of ensuring sufficient electrical conductivity.

The thickness of the positive electrode active material layer may be about 30 µm to 400 µm, for example, about 40 µm to 110 µm.

The positive electrode may be manufactured by coating a positive electrode slurry containing a positive electrode active material and optionally a binder, a conductive material, and a solvent for forming a positive electrode slurry on the positive electrode collector, followed by drying and rolling.

The solvent for forming the positive electrode slurry may include an organic solvent such as N-methyl-2-pyrrolidone (NMP). The solid content of the positive electrode slurry may be about 40% by weight to 90% by weight, for example, about 50% by weight to 80% by weight.

### (2) Negative Electrode

The negative electrode may face the positive electrode.

The negative electrode includes a negative electrode active material.

The negative electrode active material is a material capable of reversibly inserting/extracting lithium ions, and may include at least one selected from the group consisting of a carbon-based active material, a (semi)metal-based active material, and lithium metal. For example, the negative electrode active material may include at least one selected from a carbon-based active material and a (semi)metal-based active material.

The carbon-based active material may include at least one selected from the group consisting of artificial graphite, natural graphite, hard carbon, soft carbon, carbon black, graphene, and fibrous carbon. For example, the carbon-based active material may include at least one member selected from the group consisting of artificial graphite and natural graphite.

The average particle diameter (D50) of the carbon-based active material may be about 10 µm to 30 µm, for example, about 15 µm to 25 µm in terms of ensuring structural stability during charging and discharging, and reducing side reactions with the electrolyte.

For example, the (semi)metal-based active material may include at least one selected from the group consisting of (semi)metal, alloy of (semi)metal and lithium, oxide of (semi)metal, lithium titanium oxide (LTO), and lithium vanadium oxide.

The (semi)metal may include at least one selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn.

The alloy of (semi)metal and lithium may include an alloy of lithium with at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn.

The oxide of (semi)metal may include an oxide of at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn.

According to an embodiment, the (semi)metal-based active material may include a silicon-based active material.

The silicon-based active material may include a compound represented by SiOₓ (0≤x<2). In the case of SiO₂, lithium cannot be stored because SiO₂ does not react with lithium ions. Thus, x is selected to be within the above range excluding 2. According to an embodiment, the silicon-based active material may be SiO.

The average particle diameter (D50) of the silicon-based active material may be about 1 µm to 30 µm, for example, about 2 µm to 15 µm in terms of ensuring structural stability during charging and discharging, and reducing side reactions with the electrolyte.

The negative electrode may include a negative electrode collector; and a negative electrode active material layer disposed on at least one side of the negative electrode collector. At this time, the negative electrode active material may be included in the negative electrode active material layer.

The negative electrode collector may be, without being particularly limited, any negative electrode collector that has high conductivity without causing chemical changes in the battery. For example, the negative electrode collector may be copper, stainless steel, aluminum, nickel, titanium, calcined carbon, copper, or stainless steel subjected to surface treatment with carbon, nickel, titanium, or silver, and aluminum-cadmium alloy.

The negative electrode collector may typically have a thickness of about 3 µm to 500 µm.

The negative electrode collector may have fine irregularities formed on the surface to strengthen the bonding force of the negative electrode active material. For example, the negative electrode collector may be used in various forms, such as a film, a sheet, a foil, a net, a porous body, a foam, and a non-woven body.

The negative electrode active material layer may be disposed on at least one side of the negative electrode collector, for example, one side or both sides of the negative electrode collector.

The negative electrode active material may be included in the negative electrode active material in an amount of about 60% by weight to 99% by weight, for example, about 75% by weight to 95% by weight.

Since the positive electrode active material has been described above, further descriptions will be omitted.

The negative electrode active material layer may further include a binder and/or a conductive material along with the negative electrode active material.

The binder is used to improve the adhesion with the negative electrode active material layer and the negative electrode collector, thereby improving the performance of the battery, and may include, for example, at least one selected from the group consisting of a polyvinylidenefluoride-hexafluoropropylene copolymer (PVDF-co-HFP), polyvinylidenefluoride (PVDF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and substances thereof in which hydrogen is substituted with Li, Na, or Ca, and may also include various copolymers thereof.

The binder may be included in the negative electrode active material layer in an amount of about 0.5% by weight to 10% by weight, for example, about 1% by weight to 5% by weight.

The conductive material may be, without being particularly limited, any material that has conductivity without causing chemical changes in the battery. Examples thereof include graphite such as natural graphite or artificial graphite; carbon black, such as carbon black, acetylene black, Ketjen black, channel black, furnace black, lamp black, and thermal black; conductive fibers such as carbon fiber and metal fiber; conductive tubes such as carbon nanotubes; fluorocarbon; metal powders such as aluminum and nickel powder; conductive whiskers such as zinc oxide and potassium titanate; conductive metal oxides such as titanium oxide; conductive materials such as polyphenylene derivatives.

The conductive material may be included in the negative electrode active material layer in an amount of about 0.5% by weight to 10% by weight, for example, about 1% by weight to 5% by weight.

The thickness of the negative electrode active material layer may be about 10 µm to 200 µm, for example, about 20 µm to 150 µm.

The negative electrode may be manufactured by coating a negative electrode slurry containing a negative electrode active material, a binder, a conductive material, and a solvent for forming a negative electrode slurry on at least one side of the negative electrode collector, followed by drying and rolling.

The solvent for forming the negative electrode slurry may include at least one selected from the group consisting of distilled water, N-methyl-2-pyrrolidone (NMP), ethanol, methanol, and isopropyl alcohol, for example, in terms of facilitating dispersion of the negative electrode active material, the binder, and/or the conductive material. According to one embodiment, the solvent may include distilled water. The solid content of the negative electrode slurry may be about 30% by weight to 80% by weight, for example, about 40% by weight to 70% by weight.

### (3) Separator

The separator may be interposed between the positive electrode and the negative electrode.

In addition, the separator that may be used herein may be any porous polymer films commonly used as a separator such as, for example, a porous polymer film made of polyolefin-based polymers such as ethylene homopolymer, propylene homopolymer, ethylene/butene copolymer, ethylene/hexene copolymer, and ethylene/methacrylate copolymer, which may be used alone or laminated therewith. Alternatively, the separator that may be used herein may be any porous non-woven fabrics, for example, non-woven fabrics made of high melting point glass fibers, polyethylene terephthalate fibers, or the like, but not limited thereto. Further, a coated separator containing ceramic components or polymer materials may be used to ensure heat resistance or mechanical strength, and may optionally be used in a single-layer or multi-layer structure.

### (4) Non-aqueous Electrolyte

The non-aqueous electrolyte includes a lithium salt and an organic solvent.

### 1) Lithium salt

As for the lithium salt used herein, various lithium salts commonly used in non-aqueous electrolytes for lithium secondary batteries may be used without limitation. For example, the lithium salt includes Li⁺ as a cation, and as an anion, at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

For example, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂). For example, the lithium salt may include at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), and LiBETI (LiN(SO_{2C}F₂CF₃)₂)

The lithium salt may be included in the non-aqueous electrolyte at a concentration of about 0.5 M to 5 M, for example, about 0.8 M to 4 M, or about 0.8 M to 2.0 M. When the concentration of the lithium salt satisfies the above range, the lithium ion yield (Li⁺ transference number) and the degree of dissociation of lithium ions are improved, thereby improving the output characteristics of the battery.

### 2) Organic solvent

The organic solvent includes a first organic solvent and a second organic solvent.

The first organic solvent includes ethylene carbonate.

The ethylene carbonate is an organic solvent having a high viscosity and a high dielectric constant, which may easily dissociate the lithium salt in the electrolyte.

The first organic solvent may further include, in addition to the ethylene carbonate, at least one selected from the group consisting of fluoroethylene carbonate (FEC), propylene carbonate (PC), 1,2-butylene carbonate, 2,3-butylene carbonate, 1,2-pentylene carbonate, 2,3-pentylene carbonate, vinylene carbonate, γ-butyrolactone, γ-valerolactone, γ-caprolactone, σ-valerolactone, and ε-caprolactone, but is not limited thereto.

The second organic solvent includes diethyl carbonate and ethyl methyl carbonate.

In the case of the lithium secondary battery of the present disclosure, since diethyl carbonate is included as the second organic solvent, the oxidation stability of the non-aqueous electrolyte is improved, thereby enhancing the gas generation reduction effect. Accordingly, the lifespan performance of the lithium secondary battery including perlithium manganese rich oxide may be remarkably improved. Meanwhile, when diethyl carbonate is used alone as linear carbonate, there are problems of lower ionic conductivity, lower electrolyte impregnation due to increased viscosity, and increased initial resistance. However, these disadvantages may be offset by using ethyl methyl carbonate, which has relatively low viscosity and excellent ionic conductivity. When ethyl methyl carbonate is used, a better effect is achieved compared to a case where other linear carbonates other than ethyl methyl carbonate, such as dimethyl carbonate, are used.

Further, by using the first organic solvent (containing ethylene carbonate) and the second organic solvent (containing diethyl carbonate and ethyl methyl carbonate), the present disclosure may have an excellent capacity retention rate and lower the amount of gas generation, thereby preventing, for example, volume expansion of the cell. While the combination of diethyl carbonate and ethyl methyl carbonate is used as the second organic solvent in the present embodiment, it is possible to apply, as the second organic solvent, any solvent or any combination of solvents that may reduce the amount of carbon dioxide (CO₂) generated when perlithium manganese-rich oxide is used as the positive electrode component, and has low reactivity with reactive oxygen that may be released from perlithium manganese-rich oxide.

Although the effects of the present disclosure, such as the feature of lowering the amount of gas generated in the lithium secondary battery as described above, are uniquely expressed when perlithium manganese-rich oxide is used as a positive electrode active material, the organic solvents of the present disclosure may be used in combination for limited purposes in other positive electrode active materials, such as high-nickel-containing lithium nickel manganese cobalt transition metal oxides (e.g., NCM-based active materials containing 80 mol% or more Ni as a transition metal), in which the generation of reactive oxygen and excessive elution of Mn are not significant problems.

Meanwhile, the second organic solvent may further include another additional organic solvent along with the diethyl carbonate at a level that does not impair the above-described effects.

For example, the second organic solvent may further include at least one selected from the group consisting of dipropyl carbonate, methyl propyl carbonate, ethyl propyl carbonate, methyl acetate, ethyl acetate, propyl acetate, methyl propionate, ethyl propionate, propyl propionate, and butyl propionate.

The volume ratio of the first organic solvent and the second organic solvent may be about 10:90 to 50:50, for example, about 15:85 to 40:60, or about 15:85 to 35:65. When the volume ratio is within the above-mentioned range, it is possible to achieve the high ion transfer properties of the non-aqueous electrolyte and an appropriate level of viscosity, while reducing the gas generation from the perlithium manganese-rich oxide described above, thereby further improving the lifespan performance of the positive and negative electrodes.

In addition, the organic solvent may include about 10% by volume to 50% by volume of the ethylene carbonate, about 5% by volume to 80% by volume of the diethyl carbonate, and about 5% by volume to 80% by volume of the ethyl methyl carbonate. For example, the organic solvent may include about 15% by volume to 40% by volume of the ethylene carbonate, about 8% by volume to 75% by volume of the diethyl carbonate, and about 8% by volume to 75% by volume of the ethyl methyl carbonate. Alternatively, the organic solvent may include about 15% by volume to 35% by volume of the ethylene carbonate, about 30% by volume to 50% by volume of the diethyl carbonate, and about 30% by volume to 50% by volume of the ethyl methyl carbonate. Within the above-mentioned range, it is possible to achieve the high ion transfer properties and an appropriate level of viscosity of the non-aqueous electrolyte while reducing the gas generation from the above-described perlithium manganese-rich oxide, thereby further improving the lifespan performance of the positive and negative electrodes.

Meanwhile, the organic solvent may further include, without limitation, an organic solvent commonly used in non-aqueous electrolytes as needed. For example, the organic solvent may include at least one additional organic solvent selected from the group consisting of an ether-based organic solvent, a glyme-based solvent, and a nitrile-based organic solvent.

The ether-based solvent used herein may be any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl )-1,3-dioxolane (TFDOL), or a mixture of two or more thereof, but is not limited thereto.

The glyme-based solvent has a high dielectric constant and low surface tension compared to the linear carbonate-based organic solvent, and low reactivity with metal, and may include at least one selected from the group consisting of dimethoxyethane (glime, DME), diethoxyethane, diglyme, triglyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, and 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### 3) Additive

The non-aqueous electrolyte includes an additive.

The additive may include a compound represented by Formula 1: 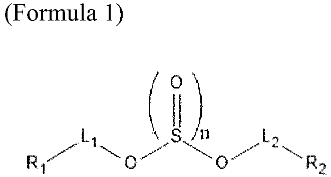 in Formula 1, n is 1 or 2; L₁ and L₂ are each independently a direct bond or a substituted or unsubstituted alkylene group having 1 to 6 carbon atoms; R₁ and R₂ are each independently selected from a substituent represented by Formula 2 below, an alkyl group having 1 to 10 carbon atoms, an alkyl group having 1 to 10 carbon atoms substituted with one or more fluorine atoms, an alkenyl group having 2 to 10 carbon atoms, and an alkynyl group having 2 to 10 carbon atoms, a phosphate group, and a nitrile group; and at least one of R₁ and R₂ is a substituent represented by Formula 2: 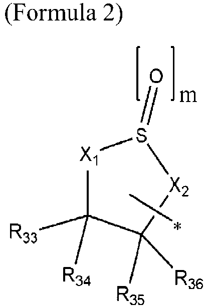 in Formula 2, m is 1 or 2, X₁ and X₂ are each independently -O- or -C(R₃₁)(R₃₂)-, provided that at least one of X₁ and X₂ is -O-; R₃₁ to R₃₆ are each independently hydrogen, an alkyl group having 1 to 6 carbon atoms, -C(=O)-R₄, or -R₅-O-C(=O)-R₆; R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms; R₅ is a substituted or unsubstituted alkylene group having 1 to 6 carbon atoms; each substituent of L₁, L₂, R₄, R₅, and R₆ is at least one independently selected from the group consisting of deuterium, -F, -Cl, -Br, -I, -CN, -NO₂, and -SO₃; * is a binding position to L₁ or L₂, when L₁ and L₂ are both direct bonds, then R₁ and R₂ are not simultaneously CS-7 below; and when L₁ and L₂ are both methylene groups, and n is 2, then R₁ and R₂ are not simultaneously CS-2 below.

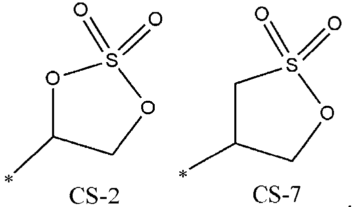

The compound represented by Formula 1 has a sulfur oxide structure in the center and a cyclic sulfur oxide structure at at least one of the two ends. By adopting such a chemical structure, the compound may induce the stable formation of anions when applied as an additive for the non-aqueous electrolyte, and may further ensure that a stable SEI layer is formed. For example, the compound represented by Formula 1 has a lower consumption rate in the secondary battery than other cyclic sulfur oxides (*e.g.,* 1,3-propane sultone), and thus remains during operation of the secondary battery, thereby continuously improving the high temperature durability of the secondary battery.

In this respect, the compound represented by Formula 1 may continue to function in the formation of a stable and robust film on the positive electrode when using, as the positive electrode active material, perlithium manganese-rich oxide which generates a large amount of gas at high temperatures and high voltages and releases an extreme amount of reactive oxygen or manganese, thereby contributing to the improvement of high temperature durability, gas reduction, and lifespan performance of secondary batteries using perlithium manganese-rich oxide. For example, the effects of improving lifespan performance, durability, and gas reduction at high temperatures of the secondary battery according to the present disclosure are implemented by using a combination of the organic solvent and the additive of the non-aqueous electrolyte described above.

Further, the effects of the present disclosure are expressed in perlithium manganese-rich oxide, and the generation of reactive oxygen and excessive elution of Mn are not a problem in other positive electrode active materials such as high-nickel-containing lithium nickel manganese-cobalt transition metal oxides (e.g., NCM-based active materials containing about 80 mol% or more of Ni among the transition metal), so that the desired effect is not expressed even when the above-described organic solvents are used in combination. Rather, when the non-aqueous electrolyte containing the organic solvents and additives described above are applied to positive electrode active materials other than perlithium manganese-rich oxide, the components of the non-aqueous electrolyte may act as resistance and reduce the lifespan performance.

In Formula 1, R₁ and R₂ are each independently selected from a substituent represented by Formula 2, an alkyl group having 1 to 10 carbon atoms, an alkyl group having 1 to 10 carbon atoms substituted with one or more fluorine atoms, an alkenyl group having 2 to 10 carbon atoms, and an alkynyl group having 2 to 10 carbon atoms, a phosphate group, and a nitrile group, and at least one of R₁ and R₂ is a substituent represented by Formula 2. For example, in Formula 1, both R₁ and R₂ may be substituents represented by Formula 2.

The alkyl group having 1 to 10 carbon atoms may be selected from, for example, an alkyl group having 1 to 3 carbon atoms, that is, a methyl group, ethyl group, and propyl group.

The alkyl group having 1 to 10 carbon atoms substituted with one or more fluorine atoms may be an alkyl group having 1 to 3 carbon atoms substituted with one or more fluorine atoms, for example, *-CF₃, *-CH₂CF₃, *-CF₂CF₃, *-CH₂CH₂CF₃, *-CH₂CF₂CF₃, and *-CF₂CF₂CF₃. In the present disclosure, the symbol "*" may refer to a binding site.

Further, the substituent represented by Formula 2 may be selected from the group consisting of CS-1 to CS-15:

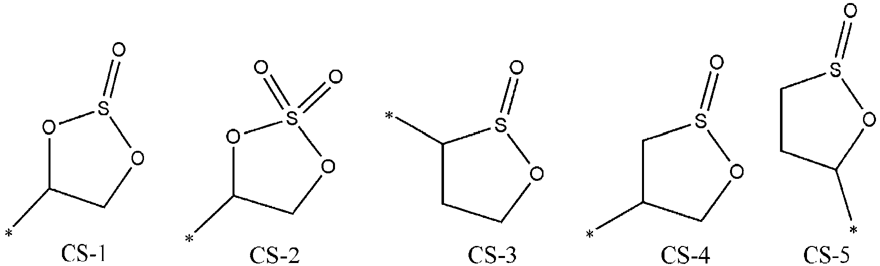

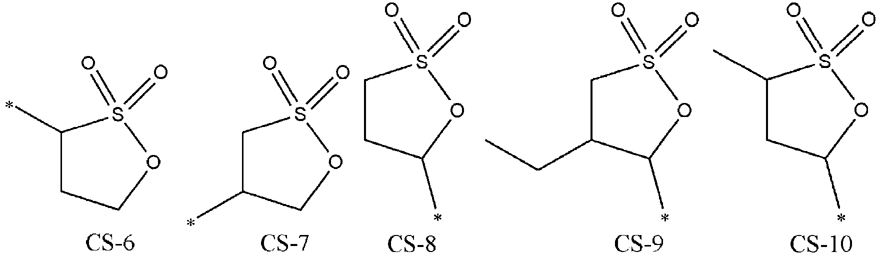

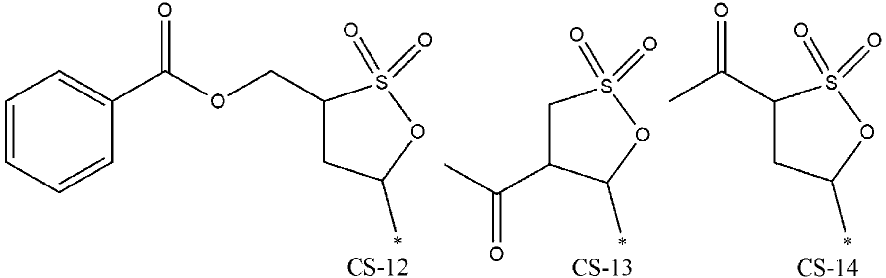

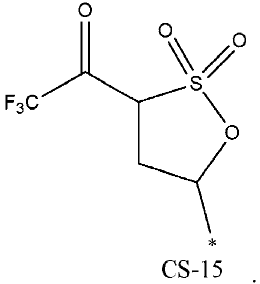

The substituent structures CS-1 to CS-15 listed above are preferred examples of the substituents represented by Formula 2 or R₁ and R₂ of Formula 1, and when the substituents of CS-1 to CS-15 are applied as R₁ and R₂ of Formula 1, the overall compound has good structural stability and may function well as additives for the non-aqueous electrolyte. For example, R₁ and R₂ may be each independently selected from the group consisting of CS-1, CS-2, CS-5, CS-8, CS-10, and CS-11, which may be preferred in terms of structural stability and ease of synthesis.

Meanwhile, in the compound represented by Formula 1 of the present disclosure, when L₁ and L₂ are both direct bonds and R₁ and R₂ are CS-7, or when L₁ and L₂ are both methylene groups, n is 2, and R₁ and R₂ are simultaneously CS-2, then the compound itself may be easily decomposed due to low structural stability, and thus the synthesis of the compound itself may be difficult. For example, compounds that meet the above conditions have a disadvantage that the ring-shaped R₁ and R₂ structures are easily degraded during the synthesis process, and even when the compound is finally synthesized, it is easily degraded during storage, and the synthesis yield is significantly low. Thus, the present disclosure excludes compounds in which L₁ and L₂ are both direct bonds and R₁ and R₂ are CS-7, and compounds in which n is 2 and R₁ and R₂ are simultaneously CS-2.

In the compound represented by Formula 1, L₁ and L₂ may be each independently a direct bond, a methylene group, or an ethylene group, for example, a methylene group. When L₁ and L₂ are methylene groups, the synthesis of the compound is facilitated and the degradation of the compound after synthesis may be inhibited.

The compound represented by Formula 1 may include at least one compound selected from the group consisting of Compounds A to U below, for example, at least one compound selected from the group consisting of Compound A, Compound F, and Compound J:

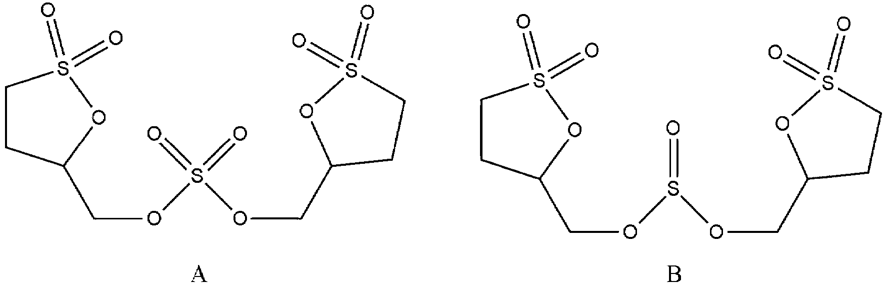

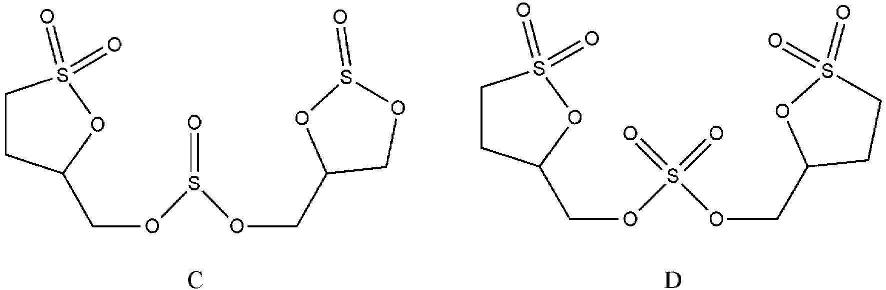

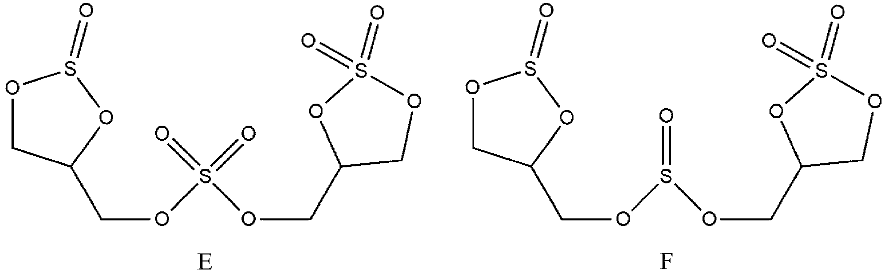

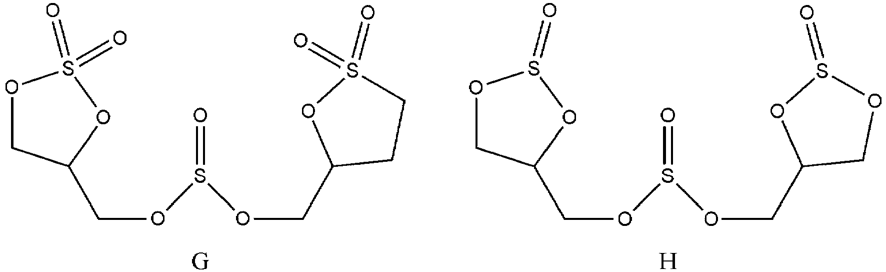

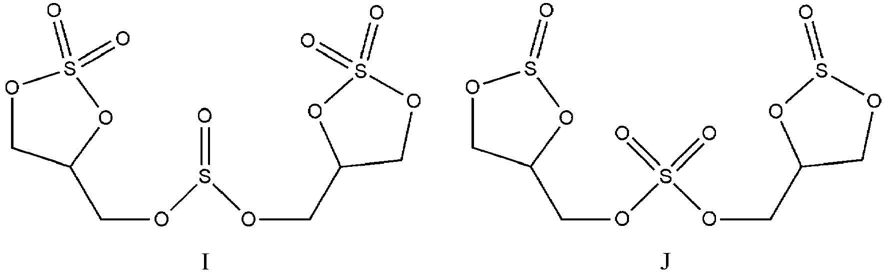

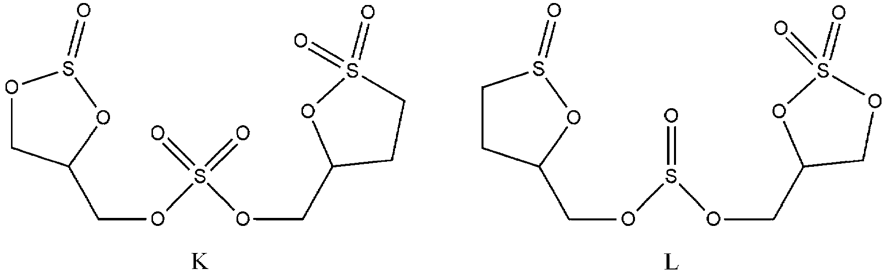

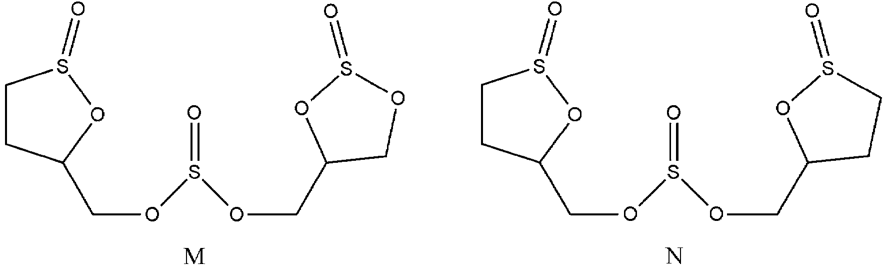

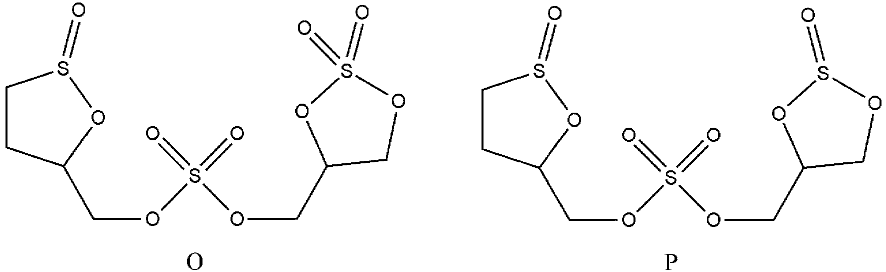

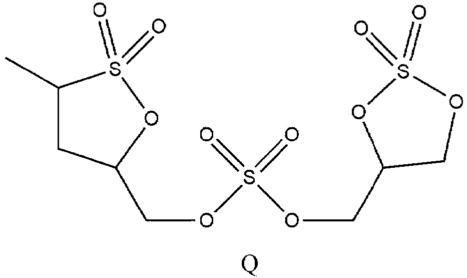

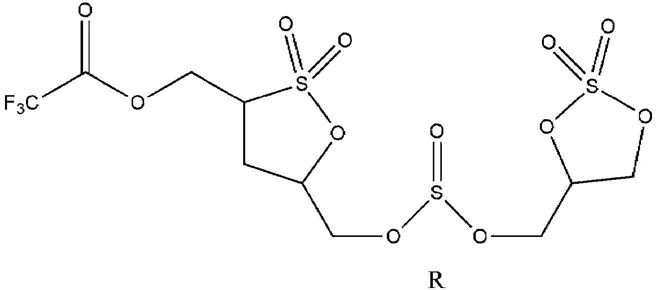

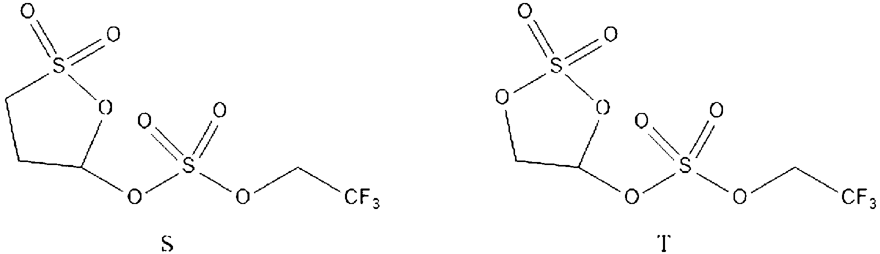

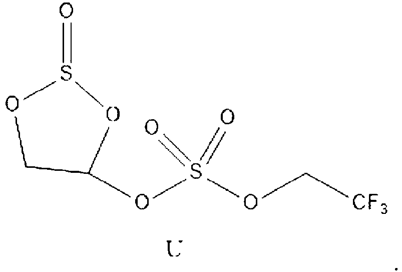

When the compound represented by Formula 1 has the structure described above, the compound has the advantage of being able to form a stable SEI layer with low resistance even with a small amount compared to commonly used additives.

The compound represented by Formula 1 may be included in the non-aqueous electrolyte in an amount of about 0.01% by weight to 10% by weight, for example, about 0.1% by weight to 5% by weight, about 0.2% by weight to 3% by weight, about 0.5% by weight to 2% by weight, or about 0.7% by weight to 1.5% by weight. Within the above-mentioned range, it is desirable in that the effect of improving the high temperature durability of the secondary battery described above may be achieved while preventing an increase in resistance due to excessive use of additives.

Meanwhile, in addition to the compound represented by Formula 1, the above-described additive may be any substance that can continue to function in the formation of a stable and robust film on the positive electrode when using, as the positive electrode active material, perlithium manganese-rich oxide which generates a large amount of gas at high temperatures and high voltages and releases an extreme amount of reactive oxygen or manganese, thereby contributing to the improvement of high temperature durability, gas reduction, and lifespan performance of secondary batteries using perlithium manganese-rich oxide.

The non-aqueous electrolyte may further include an additional additive along with the compound represented by Formula 1. The additional additive may be included in the non-aqueous electrolyte to strengthen the SEI film on the positive and negative electrodes to prevent gas generation due to electrolyte side reactions, to prevent the non-aqueous electrolyte from decomposing and causing negative electrode collapse in high power environments, or for low temperature high rate discharge characteristics, high temperature stability, overcharge protection, and battery expansion inhibition at high temperatures.

For example, the additional additive may include at least one selected from the group consisting of a sulfate-based compound, a phosphate-based compound, a borate-based compound, a nitrile-based compound, a benzene-based compound, and a lithium salt-based compound.

The sulfate-based compound may be ethylene sulfate (Esa), trimethylene sulfate (TMS), or methyl trimethylene sulfate (MTMS), and may be included in an amount of about 5% by weight or less based on the total weight of the electrolyte.

The phosphate-based compound may be at least one selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of about 5% by weight or less based on the total weight of the electrolyte.

The borate-based compound may include tetraphenyl borate and lithium oxalyldifluoroborate, and may be included in an amount of about 5% by weight or less based on the total weight of the electrolyte.

The nitrile-based compound is a nitrile-based compound other than decannitrile (DN) and 1,4-dicyano-2-butene (DCB), and representative examples thereof include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and 1,3,6-hexanetricarbonitrile.

The content of the nitrile-based compound may be about 5% by weight to 8% by weight, for example, about 6% by weight to 8% by weight. When the content of the nitrile-based compound in the electrolyte exceeds 8% by weight, the resistance may increase due to an increase in the film formed on the electrode surface, and thus, the battery performance may deteriorate.

The benzene-based compound may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte, and may include one or more compounds selected from the group consisting of LiPO₂F₂, LiODFB, LiBOB (lithium bisoxalate borate (LiB(C₂O₄)₂), and LiBF₄, which may be included in an amount of about 5% by weight or less based on the total weight of the electrolyte.

For example, the additional additive may include at least one selected from the group consisting of coumarine, vinylene carbonate, vinyl ethylene carbonate, fluoroethylene carbonate, propane sultone, propene sultone, succinonitrile, adiponitrile, ethylene sulfate, lithium difluoro phosphate (LiDFP), lithium tetrafluoroborate (LiBF₄), lithium difluoro(oxalato)borate (LiODFB), lithium bis-(oxalato)borate (LiBOB), 3-trimethoxysilanyl-propyl-N-aniline (TMSPa), tris(trimethylsilyl) Phosphite (TMSPi), and a compound represented by Formula 3:

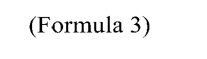

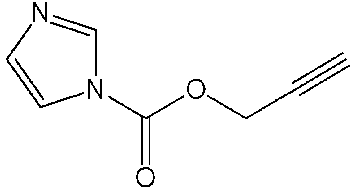

The additive may include, for example, at least one selected from the group consisting of vinylene carbonate, propane sultone, ethylene sulfate, LiDFP, LiBF₄, and the compound represented by Formula 1.

The additive may be contained in an amount of about 0.1% by weight to 15% by weight in the non-aqueous electrolyte.

The additional additive may be contained in an amount of about 0.1% by weight to 15% by weight in the non-aqueous electrolyte.

The shape of the lithium secondary battery of the present disclosure is not particularly limited, but may be a cylindrical shape using a can, a square shape, a pouch shape, or a coin shape.

Hereinafter, the present disclosure will be described in more detail through Examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

### Examples and Comparative Examples

### Example 1

### (Preparation of Non-aqueous Electrolyte)

A mixture of ethylene carbonate, diethyl carbonate, and ethyl methyl carbonate in a volume ratio of 20:10:70 was used as an organic solvent.

A non-aqueous electrolyte was prepared by adding LiPF₆ as a lithium salt, and the compound represented by Formula A as an additive, propane sultone (PS), ethylene sulfate (ESa), LiDFP, LiBF₄, and the compound represented by Formula 3 as additional additives to the organic solvent.

The LiPF₆ was contained in the non-aqueous electrolyte at a molar concentration of 1.2 M.

The compound represented by Formula A was included in an amount of 1% by weight in the non-aqueous electrolyte.

In addition, the non-aqueous electrolyte contained 0.5% by weight of vinylene carbonate, 0.8% by weight of propane sultone, 1.0% by weight of ethylene sulfate, 1.0% by weight of LiDFP, 0.5% by weight of LiBF₄, and 0.1% by weight of the compound represented by Formula 1.

### (Preparation of Lithium Secondary Battery)

A positive electrode active material (Li_{1.3}[Ni_{0.35}Mn_{0.65}]O_{2.33}, perlithium manganese-rich oxide), a conductive material (carbon nanotube), and a binder (PVdF) were added to N-methyl-2-pyrrolidone (NMP) serving as a solvent in a weight ratio of 97.4:0.6:2.0 to prepare a positive electrode mixture slurry (48% by weight of solid). The positive electrode mixture slurry was applied to one side of a positive electrode collector (Al thin film) having a thickness of 12 µm, dried, and roll pressed to prepare a positive electrode.

A negative electrode active material (a mixture of artificial graphite, natural graphite, and SiO), a conductive material (carbon black), and a binder (PVdF) were added to distilled water serving as a solvent in a weight ratio of 95.7:1.0:3.3 to prepare a negative electrode mixture slurry (70% by weight of solid). The positive electrode mixture slurry was applied to one side of a negative electrode collector (Cu thin film) having a thickness of 8 µm, dried, and roll pressed to prepare a negative electrode.

A separator made of a porous polyethylene film was interposed between the prepared positive and negative electrodes in a dry room, and then the prepared non-aqueous electrolyte was injected to prepare a secondary battery.

### Example 2

A lithium secondary battery was prepared in the same manner as in Example 1, except that the compound represented by Formula A was added to the non-aqueous electrolyte in an amount of 0.5% by weight instead of 1% by weight. That is, in Example 2, a lithium secondary battery was prepared using ethylene carbonate, diethyl carbonate, and ethyl methyl carbonate as organic solvents, and using a different content of the compound represented by Formula A as an additive than in Example 1.

### Example 3

A lithium secondary battery was prepared in the same manner as in Example 1, except that the compound represented by Formula A was added to the non-aqueous electrolyte in an amount of 2.0% by weight instead of 1% by weight. That is, in Example 3, a lithium secondary battery was prepared using ethylene carbonate, diethyl carbonate, and ethyl methyl carbonate as organic solvents, and using a different content of the compound represented by Formula A as an additive than in Examples 1 and 2.

### Example 4

A lithium secondary battery was prepared in the same manner as in Example 1, except that the compound represented by Formula S was used instead of the compound represented by Formula A. That is, in Example 4, a lithium secondary battery was prepared using ethylene carbonate, diethyl carbonate, and ethyl methyl carbonate as organic solvents, and using the compound represented by Formula S instead of the compound represented by Formula A in Example 1.

### Comparative Example 1

A lithium secondary battery was prepared in the same manner as in Example 1, except that the compound represented by Formula A was not added to the non-aqueous electrolyte. That is, in Example 1, in addition to ethylene carbonate, diethyl carbonate, and ethyl methyl carbonate as organic solvents, the compound represented by the above formula A was used as an additive, whereas in Comparative Example 1, the lithium secondary battery was prepared without using any additive other than the three organic solvents.

### Comparative Example 2

A lithium secondary battery was prepared in the same manner as in Example 1, except that 1,3-propane sultone (PS) was used instead of the compound represented by Formula A. That is, in Comparative Example 2, a lithium secondary battery was prepared using 1,3-propane sultone (PS) as an additive instead of using the compound represented by Formula A as an additive, in addition to using ethylene carbonate, diethyl carbonate, and ethyl methyl carbonate as organic solvents.

### Comparative Example 3

A lithium secondary battery was prepared in the same manner as in Example 1, except that ethylene carbonate and ethyl methyl carbonate were used as organic solvents for the non-aqueous electrolyte in a volume ratio of 20:80. That is, in Comparative Example 3, a lithium secondary battery was prepared using only two types of organic solvents, ethylene carbonate and ethyl methyl carbonate, and using the compound represented by A as an additive.

### Comparative Example 4

A lithium secondary battery was prepared in the same manner as in Example 1, except that ethylene carbonate and diethyl carbonate were used as organic solvents for the non-aqueous electrolyte in a volume ratio of 20:80. That is, in Comparative Example 4, a lithium secondary battery was prepared using only two types of organic solvents, ethylene carbonate and diethyl carbonate, and using the compound represented by A as an additive.

### Comparative Example 5

A lithium secondary battery was prepared in the same manner as in Example 1, except that ethylene carbonate, dimethyl carbonate, and ethyl methyl carbonate were used as organic solvents for the non-aqueous electrolyte in a volume ratio of 20:10:70. That is, in Comparative Example 5, a lithium secondary battery was prepared using dimethyl carbonate instead of diethyl carbonate among the three organic solvents of Example 1.

### Experimental Example

### Experimental Example 1: Evaluation of high temperature cycle charge and discharge performance

Each of the lithium secondary batteries of Examples 1 to 4 and Comparative Examples 1 to 5 prepared above was charged and discharged for 200 cycles, each of which includes charging to 4.35 V and 1/40 C under conditions of constant current/constant voltage (CC/CV) and 0.33 C at 45 °C, and discharging to 2.0 V under conditions of constant current (CC) and 0.33 C, using an electrochemical charge and discharge device.

### Experimental Example 1-A: Evaluation of capacity retention rate

The capacity retention rate was calculated using the equation below, and the results were shown in Table 1 below. Capacity retention rate (%) = {(discharge capacity after 200 cycles)/(discharge capacity after 1 cycle)} × 100

### Experimental Example 1-B: Evaluation of resistance increase rate

After one cycle of charge and discharge, the discharge capacity after one cycle was measured using an electrochemical charge and discharge device, a state of charge (SOC) was adjusted to SOC of 50%, and a pulse of 2.5 C was applied for 10 seconds to calculate the initial resistance through the difference between the voltage before applying the pulse and the voltage after applying the pulse.

After 200 cycles of charging and discharging, the resistance after 200 cycles was calculated in the same manner as above, the resistance increase rate was calculated using the equation below, and the results are shown in Table 1 below. Resistance increase rate (%) = (resistance after 200 cycles - initial resistance)/initial resistance × 100

**Table 1**

| | Experimental Example 1-A | Experimental Example 1-B |
|---|---|---|
| | Capacity retention rate (%, 45 °C, 200^{th} cycle) | Resistance increase rate (%, 45 °C, 200^{th} cycle) |
| Example 1 | 89.6 | 70.1 |
| Example 2 | 89.8 | 71.9 |
| Example 3 | 88.4 | 73.6 |
| Example 4 | 88.5 | 73.6 |
| Comparative Example 1 | 87.7 | 81.4 |
| Comparative Example 2 | 88.1 | 77.5 |
| Comparative Example 3 | 88.2 | 75.8 |
| Comparative Example 4 | 87.3 | 78.6 |
| Comparative Example 5 | 86.9 | 83.3 |

Referring to Table 1, it can be seen that the lithium secondary batteries of Examples 1 to 4, which includes a combination of the non-aqueous electrolyte according to the present disclosure and a positive electrode including perlithium manganese-rich oxide, has a higher capacity retention rate and a lower resistance increase rate during high temperature cycle charging and discharging, compared to the case of Comparative Examples 1 to 5.

### Experimental Example 2: Evaluation of high temperature storage performance

Each of the lithium secondary batteries of Examples 1 to 5 and Comparative Examples 1 to 5 prepared above was subjected to initial charge and discharge, which included charging to 4.35 V and 1/40 C under conditions of CC/CV and 0.33 C at 25 °C and then discharging to 2.0 V under conditions of CC and 0.33 C. Then, the lithium secondary battery was charged to 4.35 V and 1/40 C under conditions of CC/CV, 0.33 C at 25 °C, and then stored at 60 °C for 8 weeks.

### Experimental Example 2-A: Evaluation of capacity retention rate

After storage for 8 weeks, the lithium secondary battery was charged to 4.35 V, 1/40 C under conditions of CC/CV and 0.33 C at 25 °C, and then discharged to 2.0 V under conditions of CC and 0.33 C to measure the capacity during discharge.

The capacity retention rate was calculated according to the equation below, and the results were shown in Table 2 below. Capacity maintenance rate (%) = (discharge capacity after 8 weeks of storage/initial discharge capacity) × 100

### Experimental Example 2-B: Evaluation of resistance increase rate

After the initial charge and discharge, the capacity was checked at room temperature. After that, the lithium secondary battery was charged with SOC 50% based on the discharge capacity, and discharged at 2.5 C current for 10 seconds. Then, the resistance was measured using the difference in voltage drop at this time, which was used as the initial resistance. After 8 weeks of storage at 60°C, the resistance was measured in the same manner, which used as the final resistance. Then, the resistance increase rate was calculated using the following equation. The results are shown in Table 2 below. Resistance increase rate (%) = (final resistance - initial resistance)/initial resistance )× 100

**Table 2**

| | Experimental Example 2-A | Experimental Example 2-B |
|---|---|---|
| | Capacity retention rate (%, 60 °C, after 8 weeks of storage) | Resistance increase rate (%, 60 °C, after 8 weeks of storage) |
| Example 1 | 91.7 | 4.3 |
| Example 2 | 90.4 | 8.9 |
| Example 3 | 92.2 | 3.1 |
| Example 4 | 88.4 | 16.4 |
| Comparative Example 1 | 66.7 | 58.3 |
| Comparative Example 2 | 82.8 | 27.5 |
| Comparative Example 3 | 81.2 | 36.0 |
| Comparative Example 4 | 83.5 | 38.7 |
| Comparative Example 5 | 73.4 | 44.8 |

Referring to Table 2, it can be seen that the lithium secondary batteries of Examples 1 to 4, which includes a combination of the non-aqueous electrolyte according to the present disclosure and a positive electrode including perlithium manganese-rich oxide, has a higher capacity retention rate and a lower resistance increase rate during high temperature cycle charging and discharging, compared to the case of Comparative Examples 1 to 5.

### Reference Example

### Reference Example 1

### (1) Preparation of Non-aqueous Electrolyte

A non-aqueous electrolyte was prepared in the same manner as in Example 1.

### (2) Preparation of Lithium Secondary Battery

A positive electrode active material (LiNi_{0.85}Co_{0.05}Mn_{0.07}Al_{0.03}O₂), a conductive material (carbon nanotube), and a binder (polyvinylidene fluoride) were added to N-methyl-2-pyrrolidone (NMP) serving as a solvent in a weight ratio of 98.0:0.7:1.3 to prepare a positive electrode mixture slurry (76.5% by weight of solid). The positive electrode mixture slurry was applied to one side of a positive electrode collector (Al thin film) having a thickness of 12 µm, dried, and roll pressed to prepare a positive electrode. That is, in Reference Example 1, a positive electrode was prepared using a different type of positive electrode active material than that of Example 1, for example, high nickel-containing lithium nickel cobalt manganese oxide.

A negative electrode active material (artificial graphite), a conductive material (carbon black), and a binder (styrene-butadiene rubber) were added to distilled water serving as a solvent in a weight ratio of 96.5:1.5:2.0 to prepare a negative electrode mixture slurry (50% by weight of solid). The positive electrode mixture slurry was applied to one side of a negative electrode collector (Cu thin film) having a thickness of 8 µm, dried, and roll pressed to prepare a negative electrode.

A separator made of a porous polyethylene film was interposed between the prepared positive and negative electrodes in a dry room, and then the prepared non-aqueous electrolyte was injected to prepare a secondary battery.

### Reference Example 2

A lithium secondary battery was prepared in the same manner as in Reference Example 1, except that the non-aqueous electrolyte prepared in Comparative Example 1 was used instead of the non-aqueous electrolyte prepared in Example 1.

### Reference Experimental Example 1: Evaluation of high temperature cycle capacity retention rate

Each of lithium secondary batteries of Reference Examples 1 and 2 prepared above was charged and discharged for 200 cycles, each of which includes charging to 4.2 V and 1/40 C under conditions of constant current/constant voltage (CC/CV) and 0.33 C at 45 °C, and discharging to 2.5 V under conditions of 0.33 C using an electrochemical charge and discharge device.

### Reference Experimental Example 1-A: Evaluation of capacity retention rate

The capacity retention rate was calculated using the equation below, and the results were shown in Table 3 below. Capacity retention rate (%) = {(discharge capacity after 200 cycles)/(discharge capacity after 1 cycle)} × 100

### Reference Experimental Example 1-B: Evaluation of resistance increase rate

After one cycle of charge and discharge, the discharge capacity after one cycle was measured using an electrochemical charge and discharge device, SOC was adjusted to SOC of 50%, and a pulse of 2.5 C was applied for 10 seconds to calculate the initial resistance through the difference between the voltage before applying the pulse and the voltage after applying the pulse.

After 200 cycles of charging and discharging, the resistance after 200 cycles was calculated in the same manner as above, the resistance increase rate was calculated using the equation below, and the results are shown in Table 3 below. Resistance increase rate (%) = (resistance after 200 cycles - initial resistance)/initial resistance × 100

**Table 3**

| | Reference Experimental Example 1-A | Reference Experimental Example 1-B |
|---|---|---|
| | Capacity retention rate (%, 45 °C, 200^{th} cycle) | Resistance increase rate (%, 45 °C, 200^{th} cycle) |
| Reference Example 1 | 94.1 | 8.7 |
| Reference Example 2 | 94.3 | 7.5 |

Referring to Table 3, it can be seen that in the case of Reference Example 1 using high-nickel-containing lithium nickel-cobalt manganese oxide rather than perlithium manganese-rich oxide, the effect of improving the cycle charge/discharge performance at high temperatures is limited even when the same non-aqueous electrolyte is used as that according to Example 1. Rather, in the case of Reference Example 1, since the compound represented by Formula A was used as a non-aqueous electrolyte additive, problems such as decreased capacity retention and increased resistance occurred compared to Reference Example 2 in which the compound represented by Formula A was not used. From this, it can be understood that the non-aqueous electrolyte according to the present disclosure exerts a peculiar effect when perlithium manganese-rich oxide is used as the positive electrode active material.

### Reference Experimental Example 2: Evaluation of high temperature storage performance

Each of the lithium secondary batteries of Reference Examples 1 and 2 prepared above was subjected to initial charge and discharge, which included charging to 4.2 V and 1/40 C under conditions of CC/CV and 0.33 C at 25 °C and then discharging to 2.5 V under conditions of 0.33 C, using an electrochemical charging and discharging device. Then, the lithium secondary battery was charged to 4.2 V and 1/40 C under conditions of CC/CV, 0.33 C at 25 °C, and then stored at 60 °C for 8 weeks.

### Reference Experimental Example 2-A: Evaluation of capacity retention rate

After storage for 8 weeks, the lithium secondary battery was charged to 4.2 V, 1/40 C under conditions of CC/CV and 0.33 C at 25 °C, and discharged to 2.5 V under conditions of 0.33 C to measure the capacity during discharge.

The capacity retention rate was calculated according to the equation below, and the results were shown in Table 4 below. Capacity maintenance rate (%) = (discharge capacity after 8 weeks of storage/initial discharge capacity) × 100

### Reference Experimental Example 2-B: Evaluation of resistance increase rate

After the initial charge and discharge, the capacity was checked at room temperature. After that, the lithium secondary battery was charged with SOC 50% based on the discharge capacity, and discharged at 2.5 C current for 10 seconds. Then, the resistance was measured using the difference in voltage drop at this time, which was used as the initial resistance. After 8 weeks of storage at 60°C, the resistance was measured in the same manner, which used as the final resistance. Then, the resistance increase rate was calculated using the following equation. The results are shown in Table 4 below. Resistance increase rate (%) = (final resistance - initial resistance)/initial resistance ) × 100

**Table 4**

| | Reference Experimental Example 2-A | Reference Experimental Example 2-B |
|---|---|---|
| | Capacity retention rate (%, 60 °C, after 8 weeks of storage) | Resistance increase rate (%, 60 °C, after 8 weeks of storage) |
| Reference Example 1 | 96.8 | 5.2 |
| Reference Example 2 | 96.8 | 4.6 |

Referring to Table 4, it can be seen that in the case of Reference Example 1 using high-nickel-containing lithium nickel-cobalt manganese oxide rather than perlithium manganese-rich oxide, the effect of improving the high temperature storage performance is limited even when the same non-aqueous electrolyte is used as that according to Example 1. Rather, in the case of Reference Example 1, since the compound represented by Formula A was used as a non-aqueous electrolyte additive, problems such as increased resistance occurred compared to Reference Example 2 in which the compound represented by Formula A was not used. From this, it can be understood that the non-aqueous electrolyte according to the present disclosure exerts a peculiar effect when perlithium manganese-rich oxide is used as the positive electrode active material.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A lithium secondary battery comprising:
a positive electrode;
a negative electrode;
a separator interposed between the positive electrode and the negative electrode; and
a non-aqueous electrolyte,
wherein the positive electrode includes a positive electrode active material,
the positive electrode active material includes a perlithium manganese-rich oxide containing 50 mol% or more of Mn based on all metal elements excluding lithium, and having a molar ratio of lithium to transition metal exceeding 1,
the non-aqueous electrolyte includes a lithium salt, an organic solvent, and an additive,
the organic solvent includes a first organic solvent and a second organic solvent,
the first organic solvent includes ethylene carbonate,
the second organic solvent includes diethyl carbonate and ethyl methyl carbonate, and
the additive includes a compound represented by Formula 1: 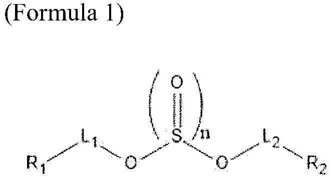
wherein,
n is 1 or 2,
L₁ and L₂ are each independently a direct bond or a substituted or unsubstituted alkylene group having 1 to 6 carbon atoms,
R₁ and R₂ are each independently selected from a substituent represented by Formula 2 below, an alkyl group having 1 to 10 carbon atoms, an alkyl group having 1 to 10 carbon atoms substituted with one or more fluorine atoms, an alkenyl group having 2 to 10 carbon atoms, and an alkynyl group having 2 to 10 carbon atoms, a phosphate group, and a nitrile group, and
at least one of R₁ and R₂ is a substituent represented by Formula 2: 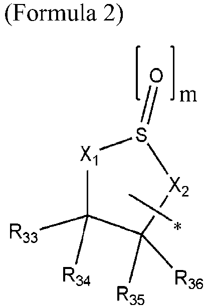
wherein,
m is 1 or 2,
X₁ and X₂ are each independently -O- or -C(R₃₁)(R₃₂)-, provided that at least one of X₁ and X₂ is -O-,
R₃₁ to R₃₆ are each independently hydrogen, an alkyl group having 1 to 6 carbon atoms, -C(=O)-R₄, or -R₅-O-C(=O)-R₆,
R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms,
R₅ is a substituted or unsubstituted alkylene group having 1 to 6 carbon atoms,
each substituent of L₁, L₂, R₄, R₅, and R₆ is at least one independently selected from the group consisting of deuterium, -F, -Cl, -Br, -I, -CN, -NO₂, and -SO₃,
* is a binding position to L₁ or L₂,
when L₁ and L₂ are both direct bonds, then R₁ and R₂ are not simultaneously CS-7 below, and
when L₁ and L₂ are both methylene groups, and n is 2, then R₁ and R₂ are not simultaneously CS-2 below.

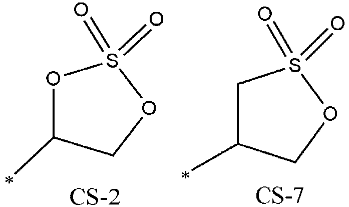

2. The lithium secondary battery according to claim 1, wherein the perlithium manganese-rich oxide is a compound represented by Formula X:
(Formula X) Li₁₊ₛ[NiₜCoᵤMnᵥM¹_{w}]O_{2+z}
wherein, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, and
s, t, u, v, w, and z satisfy 0.05≤s≤1, 0≤t≤0.5, 0≤u≤0.3, 0.5≤v<1.0, 0≤w≤0.2, and 0≤z≤1.

3. The lithium secondary battery according to claim 1, wherein a volume ratio of the first organic solvent and the second organic solvent is 10:90 to 50:50.

4. The lithium secondary battery according to claim 1, wherein the substituent represented by Formula 2 is selected from the group consisting of CS-1 to CS-15:

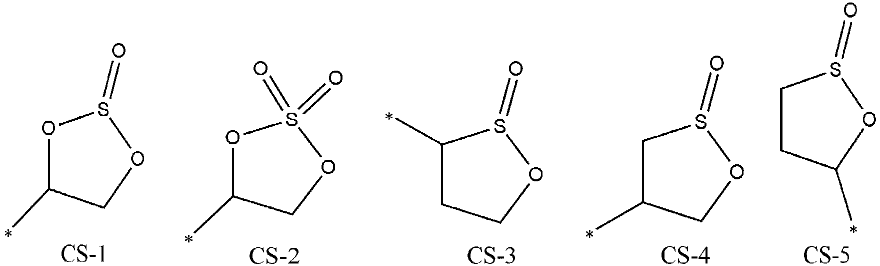

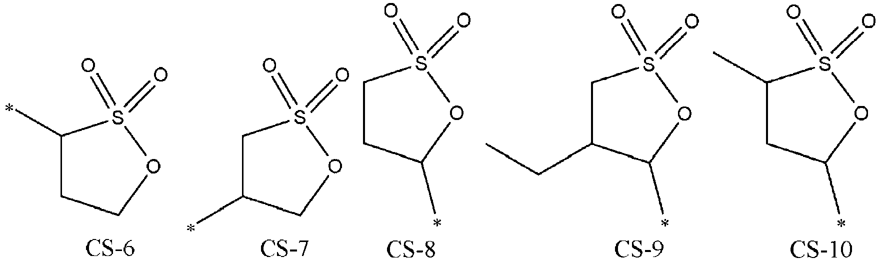

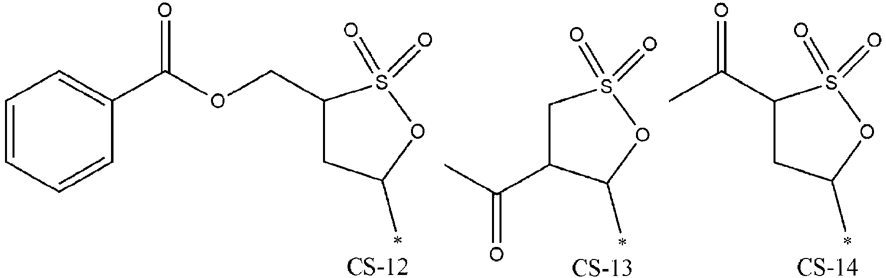

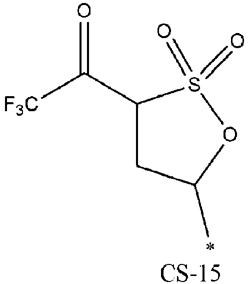

5. The lithium secondary battery according to claim 4, wherein R₁ and R₂ are each independently selected from the group consisting of CS-1, CS-2, CS-5, CS-8, CS-10, and CS-11.

6. The lithium secondary battery according to claim 1, wherein L₁ and L₂ are methylene groups.

7. The lithium secondary battery according to claim 1, wherein the compound represented by Formula 1 includes at least one compound selected from the group consisting of Compounds A to U:

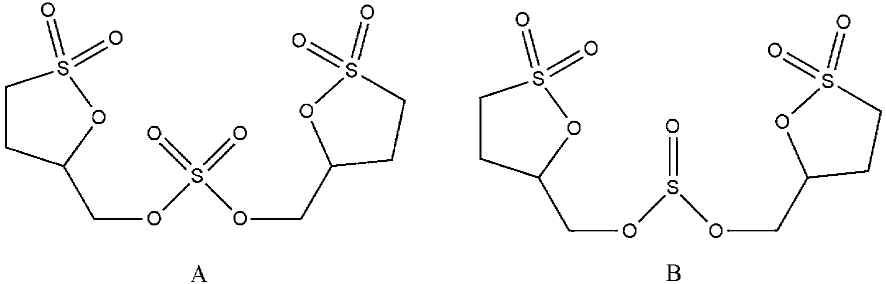

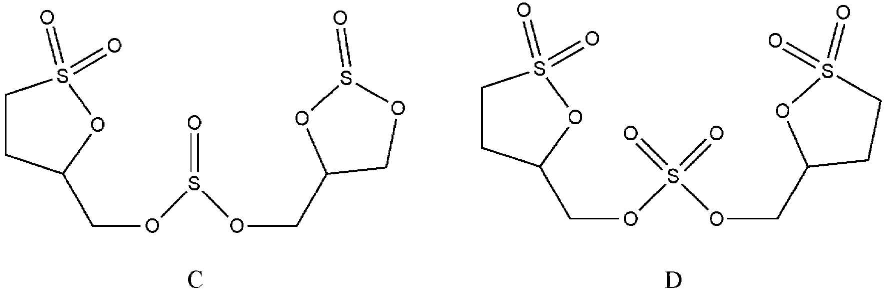

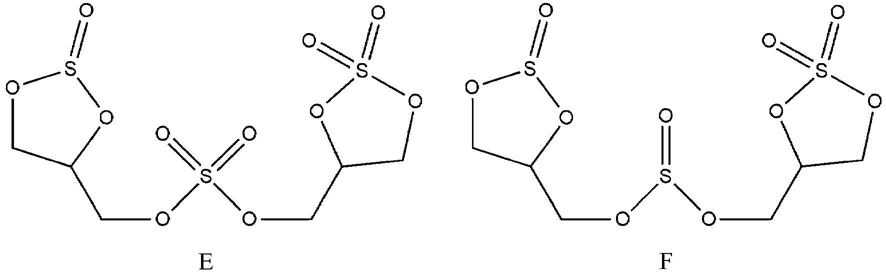

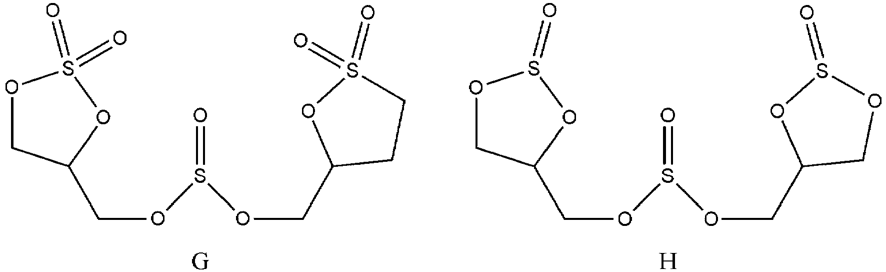

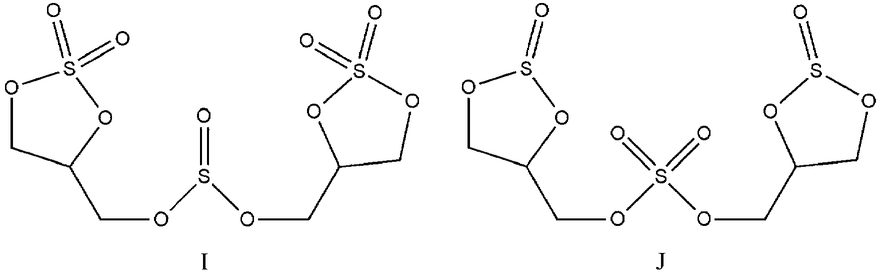

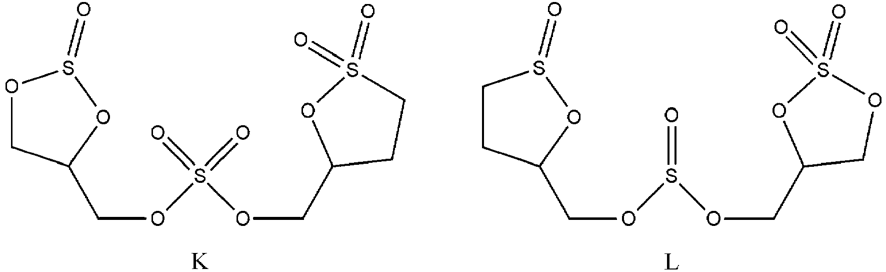

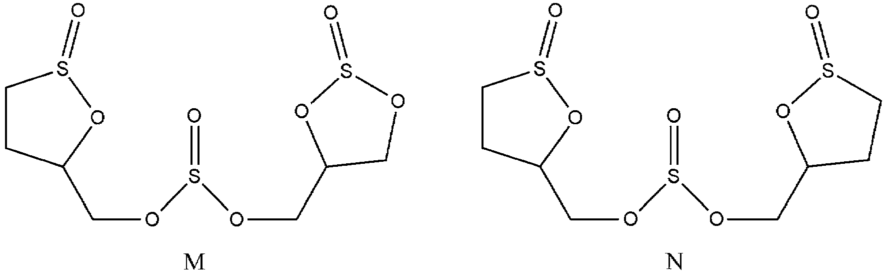

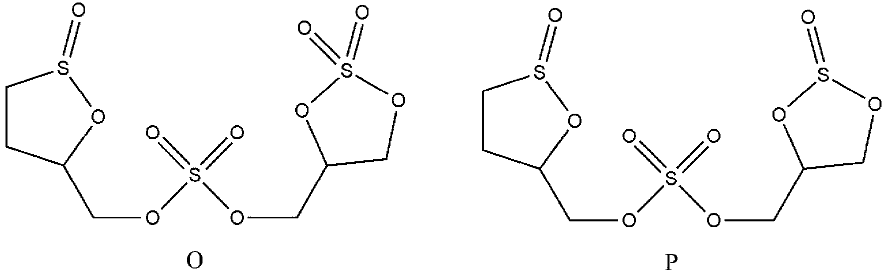

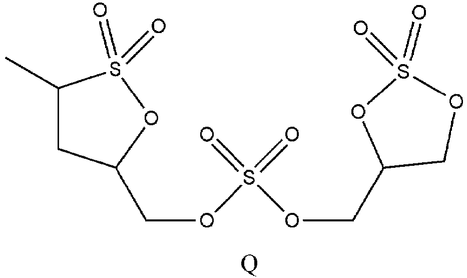

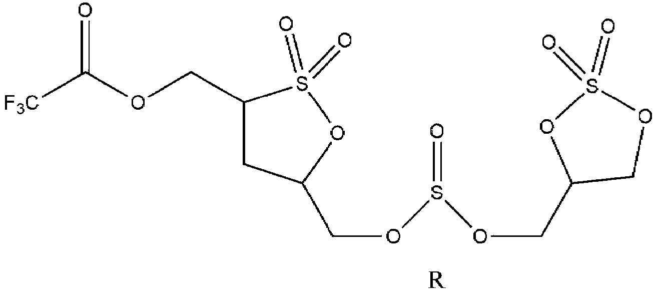

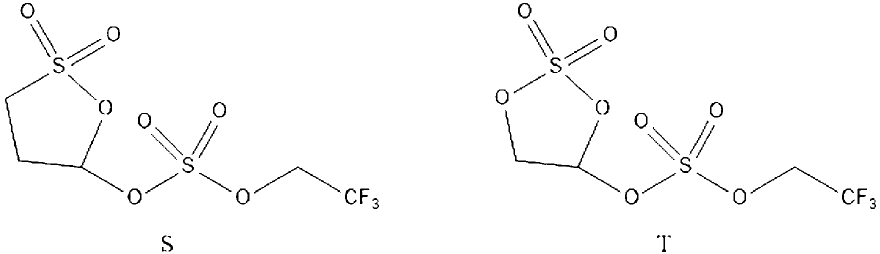

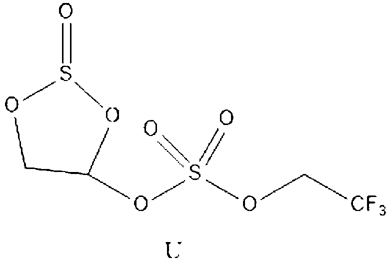

8. The lithium secondary battery according to claim 1, wherein the compound represented by Formula 1 is contained in the non-aqueous electrolyte in an amount of 0.01% by weight to 10% by weight.

9. The lithium secondary battery according to claim 1, wherein the lithium salts include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).

10. The lithium secondary battery according to claim 1, wherein the lithium salt is included in the non-aqueous electrolyte in a molar concentration of 0.5 M to 5.0 M.

11. The lithium secondary battery according to claim 1, wherein the additive includes at least one selected from the group consisting of coumarine, vinylene carbonate, vinyl ethylene carbonate, fluoroethylene carbonate, propane sultone, propene sultone, succinonitrile, adiponitrile, ethylene sulfate, lithium difluoro phosphate (LiDFP), lithium tetrafluoroborate (LiBF₄), lithium difluoro(oxalato)borate (LiODFB), lithium bis-(oxalato)borate (LiBOB), 3-trimethoxysilanyl-propyl-N-aniline (TMSPa), tris(trimethylsilyl) phosphite (TMSPi), and a compound represented by Formula 3:

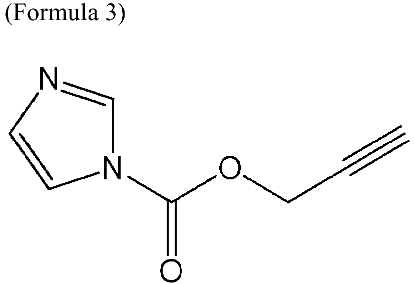

12. A method of manufacturing a lithium secondary battery, comprising:
storing, in a battery case, an electrode assembly including a positive electrode, a negative electrode, and a separator interposed between the positive electrode and the negative electrode; and
injecting a non-aqueous electrolyte into the battery case in which the electrode assembly is stored,
wherein the positive electrode includes a positive electrode active material,
the positive electrode material includes a perlithium manganese-rich oxide containing 50 mol% or more of Mn based on all metal elements excluding lithium, and having a molar ratio of lithium to transition metal exceeding 1,
the non-aqueous electrolyte includes a lithium salt, an organic solvent, and an additive,
the organic solvent includes a first organic solvent and a second organic solvent,
the first organic solvent includes ethylene carbonate,
the second organic solvent includes diethyl carbonate and ethyl methyl carbonate, and
the additive includes a compound represented by Formula 1: 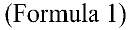 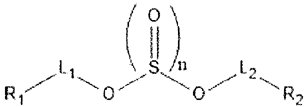
wherein,
n is 1 or 2,
L₁ and L₂ are each independently a direct bond or a substituted or unsubstituted alkylene group having 1 to 6 carbon atoms,
R₁ and R₂ are each independently selected from a substituent represented by Formula 2 below, an alkyl group having 1 to 10 carbon atoms, an alkyl group having 1 to 10 carbon atoms substituted with one or more fluorine atoms, an alkenyl group having 2 to 10 carbon atoms, and an alkynyl group having 2 to 10 carbon atoms, a phosphate group, and a nitrile group, and
at least one of R₁ and R₂ is a substituent represented by Formula 2: 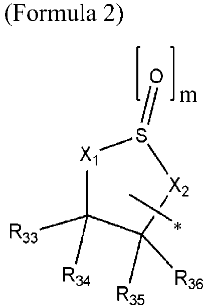
wherein,
m is 1 or 2,
X₁ and X₂ are each independently -O- or -C(R₃₁)(R₃₂)-, provided that at least one of X₁ and X₂ is -O-,
R₃₁ to R₃₆ are each independently hydrogen, an alkyl group having 1 to 6 carbon atoms, -C(=O)-R₄, or -R₅-O-C(=O)-R₆,
R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms,
R₅ is a substituted or unsubstituted alkylene group having 1 to 6 carbon atoms,
each substituent of L₁, L₂, R₄, R₅, and R₆ is at least one independently selected from the group consisting of deuterium, -F, -Cl, -Br, -I, -CN, -NO₂, and -SO₃,
* is a binding position to L₁ or L₂,
when L₁ and L₂ are both direct bonds, then R₁ and R₂ are not simultaneously CS-7 below, and
when L₁ and L₂ are both methylene groups, and n is 2, then R₁ and R₂ are not simultaneously CS-2 below.

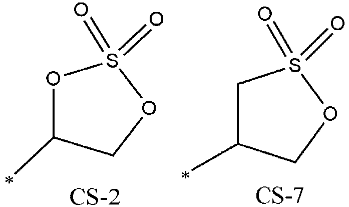

13. The method according to claim 12, wherein the perlithium manganese-rich oxide is a compound represented by Formula X:
(Formula X) Li_{1+s[}NiₜCoᵤMnᵥM¹]O_{2+z}
wherein, M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B and Mo, and
s, t, u, v, w, and z satisfy 0.05≤s≤1, 0≤t≤0.5, 0≤u≤0.3, 0.5≤v<1.0, 0≤w≤0.2, and 0≤z≤1.

14. The method according to claim 12, wherein a volume ratio of the first organic solvent and the second organic solvent is 10:90 to 50:50.

15. The method according to claim 12, wherein the substituent represented by Formula 2 is selected from the group consisting of CS-1 to CS-15:

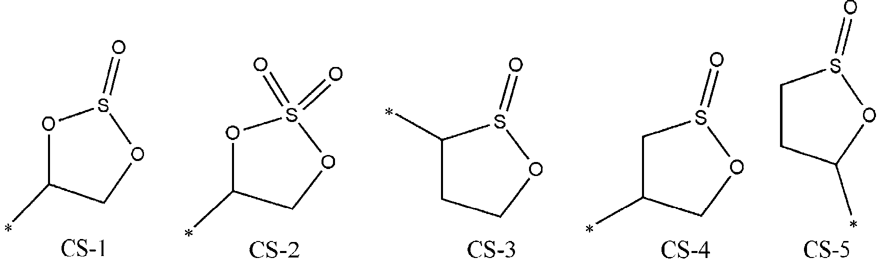

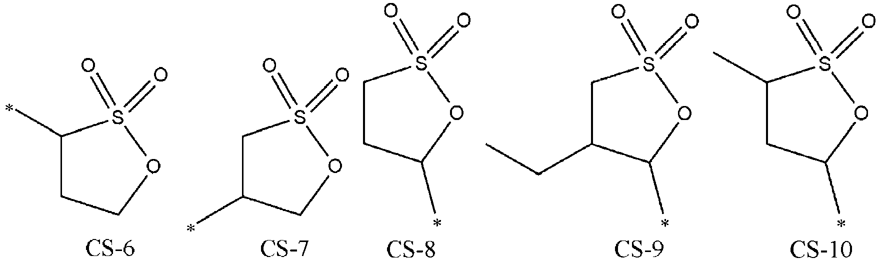

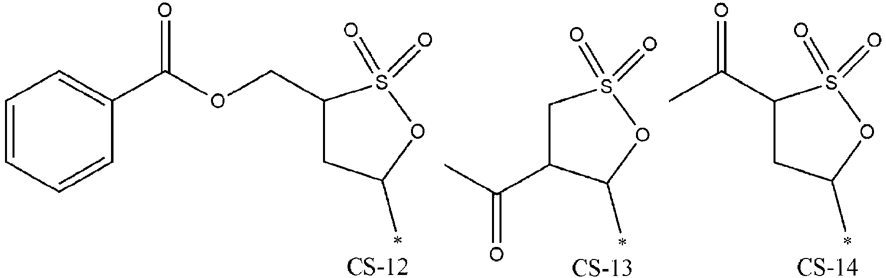

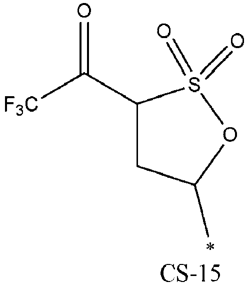

16. The method according to claim 15, wherein R₁ and R₂ are each independently selected from the group consisting of CS-1, CS-2, CS-5, CS-8, CS-10, and CS-11.

17. The method according to claim 12, wherein L₁ and L₂ are methylene groups.

18. The method according to claim 12, wherein the compound represented by Formula 1 includes at least one compound selected from the group consisting of Compounds A to U:

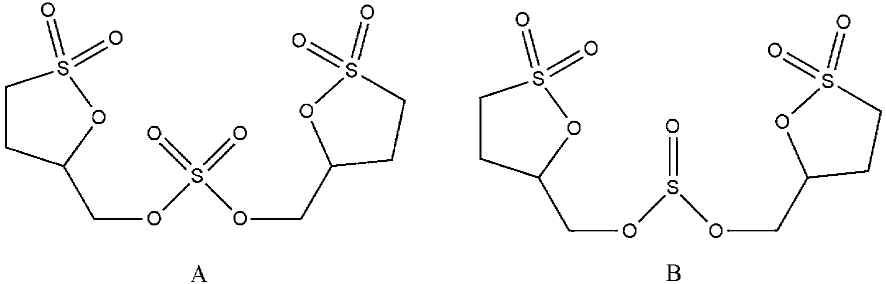

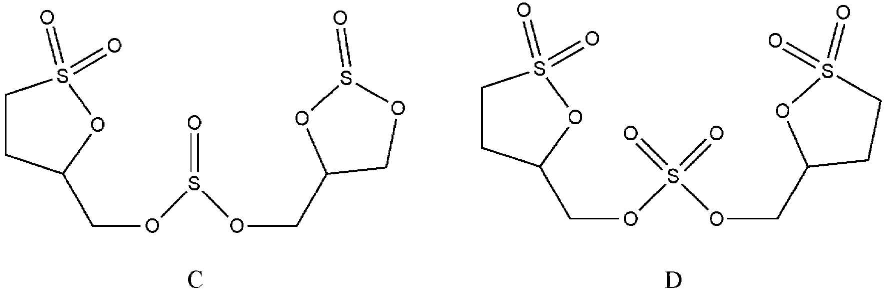

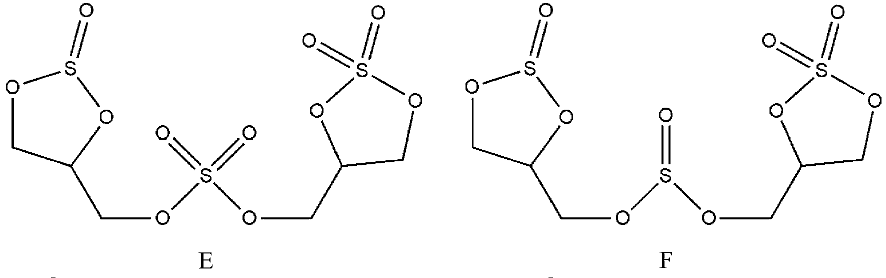

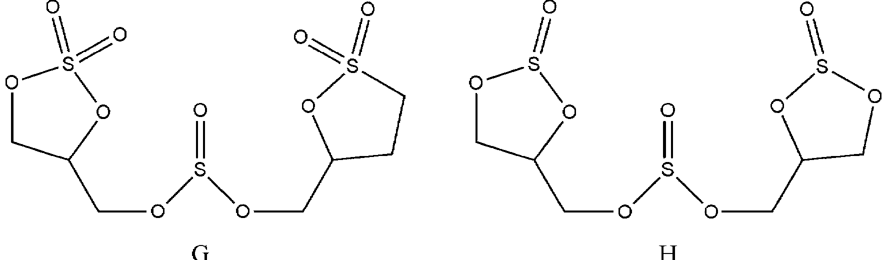

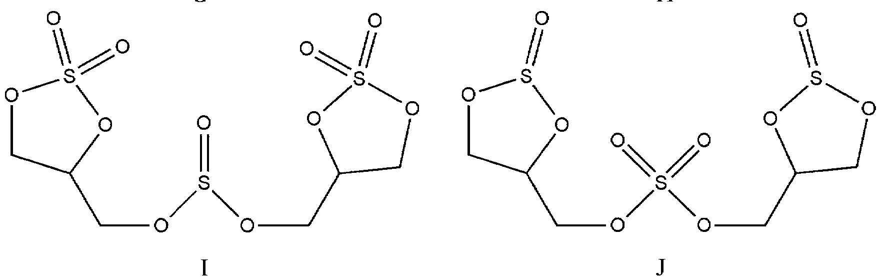

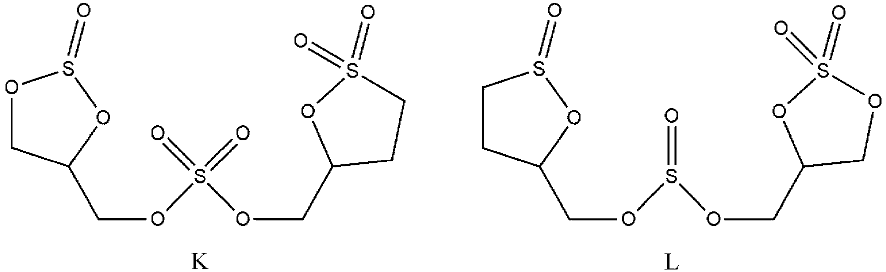

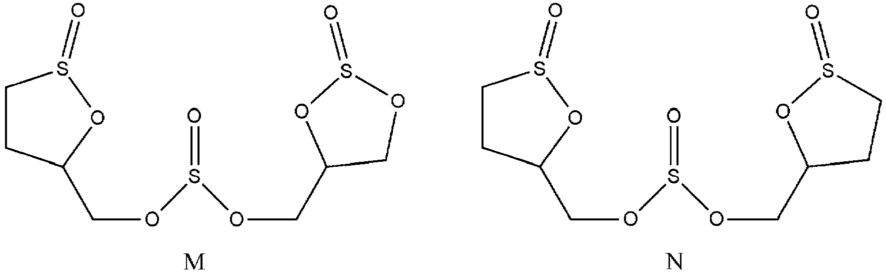

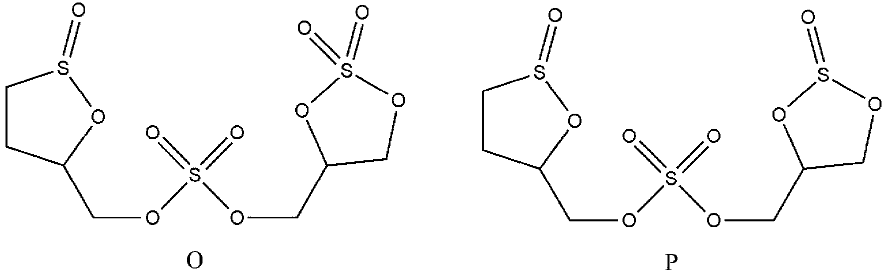

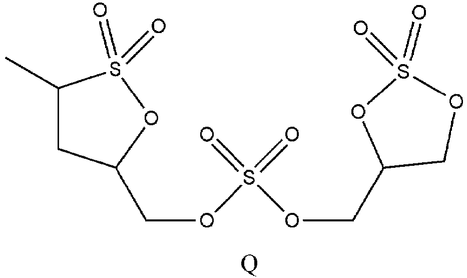

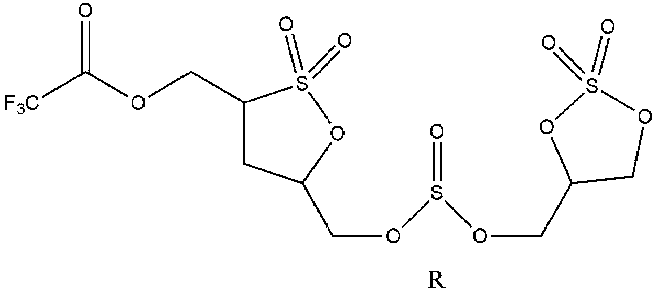

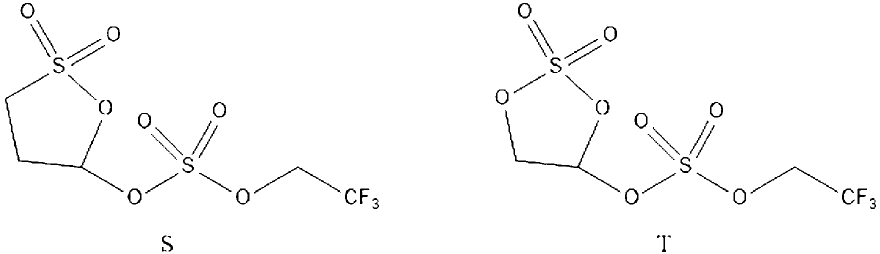

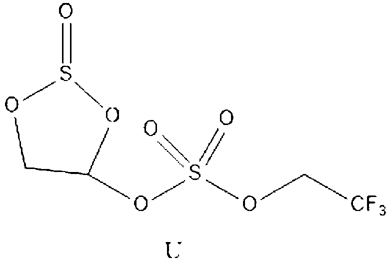

19. The method according to claim 12, wherein the compound represented by Formula 1 is contained in the non-aqueous electrolyte in an amount of 0.01% by weight to 10% by weight.

20. The method according to claim 12, wherein the lithium salts include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).
